# EUROPEAN PATENT APPLICATION

(11) **EP 4 786 519 A1**
(43) Date of publication of application: **05.08.2026**
(21) Application number: 24872242.3
(22) Date of filing: 25.09.2024
(51) Int. Cl.: C08G 65/30, B01D 15/00, B01J 20/22

(54) **METHOD FOR PRODUCING HIGHLY-PURE BRANCHED POLYETHYLENE GLYCOL COMPOUND**

(30) Priority: 29.09.2023 JP 2023169554
(71) Applicant: NOF Corporation, Shibuya-ku Tokyo 150-6019 (JP); The University of Tokyo, Bunkyo-ku, Tokyo 113-8654 (JP)
(72) Inventor: NAKATSUHARA, Hitoshi, Kawasaki-shi, Kanagawa 210-0865 (JP); KINOSHITA, Shuhei, Kawasaki-shi, Kanagawa 210-0865 (JP); ICHIKAWA, Takashi, Kawasaki-shi, Kanagawa 210-0865 (JP); UEMURA, Takashi, Tokyo 113-8654 (JP); HOSONO, Nobuhiko, Tokyo 113-8654 (JP)
(74) Representative: Weickmann & Weickmann PartmbB
(86) International application number: PCT/JP2024/034086
(87) International publication number: WO 2025/070456

(57) **Abstract**

The present invention provides a method for producing a highly-pure branched PEG compound, including
step (1a) of mixing a mixture containing a branched PEG compound and a linear PEG compound as an impurity with a porous metal complex in the presence of a solvent to adsorb the linear PEG compound onto the porous metal complex,
step (2a) of removing the porous metal complex adsorbing the linear PEG compound from the mixture containing the branched PEG compound and the porous metal complex adsorbing the linear PEG compound to obtain a solution containing the branched PEG compound, and
step (3) of recovering the branched PEG compound from the solution containing the branched-chain PEG compound.

## Description

### [Technical Field]

The present invention relates to a production method of a highly-pure branched polyethylene glycol compound.

### [Background Art]

Polyethylene glycol compounds are widely used as materials for drug delivery systems and medical hydrogels. Such polyethylene glycol compounds for medical use are required to show low levels of impurities.

For example, one type of polyethylene glycol compound, monomethoxypolyethylene glycol, is known to contain, linear polyethylene glycol (hereinafter sometimes referred to as "diol product") having hydroxy groups at both ends and produced by the reaction of water molecules and ethylene oxide, as an impurity (see, for example, Patent Literature 1).

Diol products are formed even when only a trace amount of water is present in the system during the production of polyethylene glycol compounds, and it is thus difficult to completely suppress the formation thereof. Therefore, a method for reducing diol products in polyethylene glycol compounds is strongly desired.

On the other hand, as a method for separating multiple polymer compounds from each other, a method using a porous metal complex is known (see, for example, Patent Literature 2). In the method described in Patent Literature 2, multiple polymer compounds are mixed with a porous metal complex, then the porous metal complex is filtered, and specific polymer materials present in the pores of the porous metal complex are recovered, whereby the desired polymer compound can be concentrated or separated. Furthermore, porous metal complexes such as metal organic framework (MOF) are known to be available for gas separation, storage, and the like (see, for example, Patent Literature 3).

### [Citation List]

### [Patent Literature]

[Patent Literature 1]
   JP 11-335460 A
[Patent Literature 2]
   WO 2019/078171
[Patent Literature 3]
   JP 2017-500204 A

### [Summary of Invention]

### [Technical Problem]

The method described in Patent Literature 2 separates multiple polymer compounds from each other based on differences in terminal functional groups. However, Patent Literature 2 does not disclose separating branched polyethylene glycol compounds and linear polyethylene glycol compounds by utilizing differences in branched structure or linear structure.

The present invention has been made in view of the above-mentioned circumstances, and aims to obtain a highly-pure branched polyethylene glycol compound with a reduced content of linear polyethylene glycol compounds (for example, the aforementioned diol product) as impurities.

### [Solution to Problem]

The present inventors have conducted intensive studies and found that, by using a porous metal complex, a linear polyethylene glycol compound can be removed from a mixture containing a branched polyethylene glycol compound and the linear polyethylene glycol compound as an impurity, and the highly-pure branched polyethylene glycol compound can be obtained. Based on this finding, the present invention provides the following.
[1] A method for producing a highly-pure branched polyethylene glycol compound, comprising
   step (1a) of mixing a mixture containing a branched polyethylene glycol compound and a linear polyethylene glycol compound as an impurity with a porous metal complex in the presence of a solvent to adsorb the linear polyethylene glycol compound onto the porous metal complex,
   step (2a) of removing the porous metal complex adsorbing the linear polyethylene glycol compound from a mixture containing the branched polyethylene glycol compound and the porous metal complex adsorbing the linear polyethylene glycol compound to obtain a solution containing the branched polyethylene glycol compound, and
   step (3) of recovering the branched polyethylene glycol compound from the solution containing the branched-chain polyethylene glycol compound.
[2] A method for producing a highly-pure branched polyethylene glycol compound, comprising
   step (1b) of mixing a mixture containing a branched polyethylene glycol compound and a linear polyethylene glycol compound as an impurity with a porous metal complex in the absence of a solvent to adsorb the linear polyethylene glycol compound onto the porous metal complex,
   step (2b) of mixing a solvent and a mixture containing the branched polyethylene glycol compound and the porous metal complex adsorbing the linear polyethylene glycol compound, and removing, from a thus-obtained mixture, the porous metal complex adsorbing the linear polyethylene glycol compound to obtain a solution containing the branched polyethylene glycol compound, and
   step (3) of recovering the branched polyethylene glycol compound from the solution containing the branched-chain polyethylene glycol compound.
[3] A method for producing a highly-pure branched polyethylene glycol compound, comprising
   step (1) of mixing a mixture containing a branched polyethylene glycol compound and a linear polyethylene glycol compound as an impurity with a porous metal complex in the presence or absence of a solvent to adsorb the linear polyethylene glycol compound onto the porous metal complex,
   step (2a) of removing the porous metal complex adsorbing the linear polyethylene glycol compound from a mixture containing the branched polyethylene glycol compound and the porous metal complex adsorbing the linear polyethylene glycol compound to obtain a solution containing the branched polyethylene glycol compound, when the mixing in step (1) is performed in the presence of a solvent, or
   step (2b) of mixing a solvent and a mixture containing the branched polyethylene glycol compound and the porous metal complex adsorbing the linear polyethylene glycol compound, and removing, from a thus-obtained mixture, the porous metal complex adsorbing the linear polyethylene glycol compound to obtain a solution containing the branched polyethylene glycol compound, when the mixing in step (1) is performed in the absence of a solvent, and
   step (3) of recovering the branched polyethylene glycol compound from the solution containing the branched-chain polyethylene glycol compound.
[4] The production method of any one of the aforementioned [1] to [3], wherein the branched polyethylene glycol compound is a branched compound represented by the formula (I): 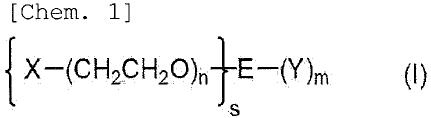 wherein m is 0 or 1,
   when m is 0, then s is an integer of 3 to 9, and when m is 1, then s is an integer of 2 to 8,
   n in the number of s are each independently a number between 20 and 2000,
   Y and X in the number of s are each independently a hydroxy group optionally substituted by a substituent, and
   E is a linker with a (s+m) valency.
[5] The production method of the aforementioned [4], wherein the substituent is a methyl group, an ethyl group, a propyl group, an isopropyl group, a butyl group, an isobutyl group, a sec-butyl group, a tert-butyl group, a pentyl group, an isopentyl group, a hexyl group, an isohexyl group, a heptyl group, an isoheptyl group, a phenyl group, a benzyl group, a trityl group, a tert-butyldimethylsilyl group, or a tert-butyldiphenylsilyl group.
[6] The production method of the aforementioned [4] or [5], wherein E is a linker having a structure obtained by removing hydroxy groups from glycerin, diglycerine, triglycerin, tetraglycerin, pentaglycerin, hexaglycerin, heptaglycerin, pentaerythritol, dipentaerythritol, tetritol, pentitol, or hexitol.
[7] The production method of any one of the aforementioned [1] to [6], wherein the solvent used in step (1a) or step (2b) is at least one selected from the group consisting of N,N-dimethylformamide, ethanol, ethyl acetate, chloroform, and toluene.
[8] The production method of any one of the aforementioned [1] to [7], wherein the branched polyethylene glycol compound has a number average molecular weight of 4,000 to 80,000.
[9] The production method of any one of the aforementioned [1] to [7], wherein the branched polyethylene glycol compound has a number average molecular weight of 5,000 to 80,000.
[10] The production method of any one of the aforementioned [1] to [9], wherein the linear polyethylene glycol compound has a number average molecular weight of 1,500 to 90,000.
[11] The production method of any one of the aforementioned [1] to [9], wherein the linear polyethylene glycol compound has a number average molecular weight of 2,000 to 90,000.

### [Advantageous Effects of Invention]

According to the present invention, a highly-pure branched polyethylene glycol compound can be obtained by removing a linear polyethylene glycol compound from a mixture containing the branched polyethylene glycol compound and the linear polyethylene glycol compound as an impurity.

### [Description of Embodiments]

The present invention is described in order below. The descriptions in the present specification can be combined with each other unless it is clear that they cannot be combined.

The present invention is directed a production method of a highly-pure branched polyethylene glycol compound. In more detail, the present invention is a method for producing a highly-pure branched polyethylene glycol compound by removing a linear polyethylene glycol compound from a mixture containing the branched polyethylene glycol compound and the linear polyethylene glycol compound as an impurity. Therefore, the "highly-pure branched polyethylene glycol compound" in the present invention more precisely means a mixture containing the aforementioned branched polyethylene glycol compound (purity: less than 100%) in which the purity of the aforementioned branched polyethylene glycol compound is improved compared to a mixture containing the branched polyethylene glycol compound and the linear polyethylene glycol compound used in the present invention, or the aforementioned branched polyethylene glycol compound itself (purity: 100%).

In the present invention, the "purity" of the "highly-pure branched polyethylene glycol compound" means "100×mass of the aforementioned branched polyethylene glycol compound/total mass of the aforementioned mixture containing the branched polyethylene glycol compound". When the purity is 100%, the aforementioned mixture containing the branched polyethylene glycol compound" in the aforementioned formula is the aforementioned branched polyethylene glycol compound.

In the present invention, the "purity" of the "branched polyethylene glycol compound" is preferably 90% or more, more preferably 92% or more, further preferably 95% or more. The upper limit of the purity is 100%.

### (Polyethylene glycol compound)

In the present invention, the "branched polyethylene glycol compound" means a compound having two or more polyethylene glycol chains and having a branched structure.

In the present invention, the "linear polyethylene glycol compound" means a compound having a polyethylene glycol chain and a linear structure. The polyethylene glycol chain of the "linear polyethylene glycol compound" may be only one, or two or more (for example, a compound having a linear structure in which two linear polyethylene glycol chains are linked by one linker). The "linear polyethylene glycol compound" is preferably a compound having one polyethylene glycol chain and a linear structure (e.g., the aforementioned diol product).

The number average molecular weight (hereinafter sometimes to be abbreviated as "Mn") of the branched polyethylene glycol compound is preferably 4,000 or more, more preferably 5,000 or more, further preferably 20,000 or more, and preferably 90,000 or less, further preferably 80,000 or less, from the viewpoint of separation between the branched polyethylene glycol compound and the linear polyethylene glycol compound (hereinafter sometimes to be abbreviated as "the viewpoint of separation").

The Mn of the linear polyethylene glycol compound is preferably 1,500 or more, more preferably 2,000 or more, further preferably 10,000 or more, particularly preferably 20,000 or more, and preferably 90,000 or less, more preferably 80,000 or less, further preferably 40,000 or less, from the viewpoint of separation.

The Mn of the polyethylene glycol compound can be calculated by gel permeation chromatography (GPC) measurement (reference: polyethylene glycol (HO-(C₂H₅O)-H)

A mixture containing a branched polyethylene glycol compound and a linear polyethylene glycol compound can be obtained by known methods for producing branched polyethylene glycol compounds.

Examples of the method for producing a branched polyethylene glycol compound include:
(i) a method using a polyhydric alcohol having three or more hydroxy groups as a starting material and adding ethylene oxide thereto (see, for example, JP 2004-197077 A);
(ii) a method reacting a linear polyethylene glycol compound having hydroxy groups with a compound having three or more functional groups that can react with hydroxy groups (see, for example, JP H9-504299 A). In the above-mentioned method (i), when water is present when adding ethylene oxide, linear polyethylene glycol with hydroxy groups at both ends is formed as a byproduct. In the above-mentioned method (ii), the linear polyethylene glycol compound used as a raw material may remain as an impurity.

The branched polyethylene glycol compound is preferably a branched compound represented by the formula (I): 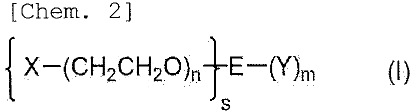
wherein m is 0 or 1,
   when m is 0, then s is an integer of 3 to 9, when m is 1, then s is an integer of 2 to 8,
   n in the number of s are each independently a number from 20 to 2000,
   Y and X in the number of s are each independently a hydroxy group optionally substituted by a substituent, and
   E is a linker with a (s+m) valency
(hereinafter sometimes to be abbreviated as "compound (I)"). Here, "branched compound" means a compound having a branched structure. Therefore, compound (I) specifically means a compound represented by the formula (I) and having a branched structure.

The symbols in the formula (I) are described in order below.

In the formula (I), m being 0 means that Y does not exist in the formula (I).

In the formula (I), n is the number of repeating oxyethylene units. Since this repeating number is an average value, it may be a decimal.

In the formula (I), when m is 0, s is an integer from 3 to 9, preferably from 3 to 5. In the formula (I), when m is 1, s is an integer from 2 to 8, preferably from 2 to 4. Therefore, there are multiple n and multiple X in the formula (I). The n in the number of s may be the same or different. Similarly, the X in the number of s may be the same or different.

Each of the n in the number of s in the formula (I) is independently a number from 20 to 2000, preferably from 200 to 1000. For ease of manufacturing compound (I), it is preferable that the n in the number of s are the same.

In the formula (I), Y and X in the number of s are each independently a hydroxy group which may be substituted by a substituent. For ease of preparation of compound (I), it is preferable that the X in the number of s are the same.

In the present invention, "hydroxy group optionally substituted by a substituent" means a hydroxy group or a hydroxy group which is substituted by a substituent, and "hydroxy group which is substituted by a substituent" means a hydroxy group (-OR) in which the hydrogen atom (H) of the hydroxy group (-OH) is substituted by a substituent (R).

The substituents of the aforementioned hydroxy group are preferably a methyl group, an ethyl group, a propyl group, an isopropyl group, a butyl group, an isobutyl group, a sec-butyl group, a tert-butyl group, a pentyl group, an isopentyl group, a hexyl group, an isohexyl group, a heptyl group, an isoheptyl group, a phenyl group, a benzyl group, a trityl group, a tert-butyldimethylsilyl group, or a tert-butyldiphenylsilyl group, more preferably a benzyl group, a trityl group, a tert-butyldimethylsilyl group, or a tert-butyldiphenylsilyl group, further preferably a benzyl group.

X in the number of s are
preferably each independently a hydroxy group optionally substituted by a methyl group, an ethyl group, a propyl group, an isopropyl group, a butyl group, an isobutyl group, a sec-butyl group, a tert-butyl group, a pentyl group, an isopentyl group, a hexyl group, an isohexyl group, a heptyl group, an isoheptyl group, a phenyl group, a benzyl group, a trityl group, a tert-butyldimethylsilyl group, or a tert-butyldiphenylsilyl group,
more preferably each independently a hydroxy group optionally substituted by a benzyl group, a trityl group, a tert-butyldimethylsilyl group, or a tert-butyldiphenylsilyl group,
further preferably both are hydroxy groups (i.e., unsubstituted hydroxy groups).

Y is
preferably a hydroxy group optionally substituted by a methyl group, an ethyl group, a propyl group, an isopropyl group, a butyl group, an isobutyl group, a sec-butyl group, a tert-butyl group, a pentyl group, an isopentyl group, a hexyl group, an isohexyl group, a heptyl group, an isoheptyl group, a phenyl group, a benzyl group, a trityl group, a tert-butyldimethylsilyl group, or a tert-butyldiphenylsilyl group,
more preferably a hydroxy group optionally substituted by a benzyl group, a trityl group, a tert-butyldimethylsilyl group, or a tert-butyldiphenylsilyl group,
further preferably a hydroxy group substituted by a benzyl group.

In the formula (I), E is a linker with a (s+m) valency, i.e., a trivalent to nonavalent linker. E is preferably a linker having a structure obtained by removing hydroxy groups from glycerin, diglycerin, triglycerin, tetraglycerin, pentaglicerin, hexaglycerin, heptaglicerin, pentaerythritol, dipentaerythritol, tetritol, pentitol, or hexitol.

The aforementioned diglycerin, triglycerin, tetraglycerin, pentaglicerin, hexaglycerin, and heptaglicerin are compounds generally collectively referred to as "polyglycerin (also known as polyglycerol)". "Polyglycerin" means a compound having a structure in which multiple glycerin (also known as glycerol) molecules are linked by ether bonds. Specifically, "diglycerin" refers to a compound having a structure in which two glycerin molecules are linked by an ether bond, and "heptaglycerin" refers to a compound having a structure in which seven glycerin molecules are linked by ether bonds. "Triglycerin", "tetraglycerin", "pentaglycerin", and "hexaglycerin" have the same meaning as "diglycerin" and "heptaglycerin." Polyglycerin may have a structure in which multiple glycerin molecules are linked in a linear chain, or may have a structure in which multiple glycerin molecules are linked in a branched chain.

In the present invention, "tetritol" refers to a tetrahydric sugar alcohol represented by the formula: C₄H₆(OH)₄, for example, erythritol.

In the present invention, "pentitol" refers to a pentahydric sugar alcohol represented by the formula: C₅H₇(OH)₅, for example, xylitol.

In the present invention, "hexitol" refers to a hexahydric sugar alcohol represented by the formula: C₆H₈(OH)₆, for example, mannitol.

In the formula (I), preferably, when m is 0, s is an integer of 3 to 5, when m is 1, s is an integer of 2 to 4, and E is a linker represented by any of the formula (IIa) to the formula (IIc): 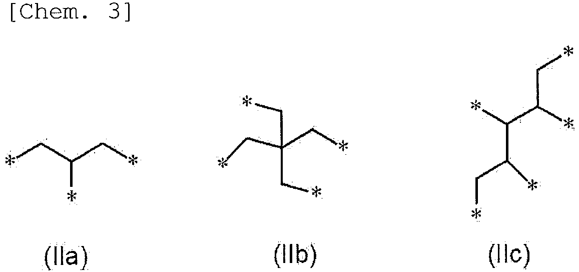 wherein * is a bonding position.
It is preferable that the linker be represented by one of the following. The * is a bonding position, not a carbon atom. That is, "*-" shows a single bond.

The linker represented by the formula (IIa) is a linker having a structure obtained by removing hydroxy groups from glycerol, the linker represented by the formula (IIb) is a linker having a structure obtained by removing hydroxy groups from pentaerythritol, and the linker represented by the formula (IIc) is a linker having a structure obtained by removing hydroxy groups from pentitol (e.g., xylitol).

In the formula (I), more preferably, when m is 0, s is an integer of 3 or 4, when m is 1, s is an integer of 2 or 3, and E is a linker represented by the formula (IIa) or the formula (IIb).

### (Porous metal complex)

In the present invention, the separation of a branched polyethylene glycol compound and a linear polyethylene glycol compound by a porous metal complex is performed by adsorption of the linear polyethylene glycol compound onto the porous metal complex. Here, the "porous metal complex" refers to a metal complex having a porous three-dimensional structure formed by metal ions and organic crosslinking ligands that link them. Only one type of porous metal complex may be used, or two or more types thereof may be used in combination.

The pore size of the porous metal complex is preferably 0.3 nm or more, more preferably 0.4 nm or more, further preferably 0.5 nm or more, and preferably 5 nm or less, more preferably 3 nm or less, further preferably 2 nm or less, particularly preferably 1.5 nm or less. This pore size can be measured by nitrogen gas adsorption, single-crystal X-ray diffraction, or powder X-ray diffraction.

Examples of the porous metal complex include the following:
(i) a metal complex having a structure in which polyhedra composed of metal ion and first organic bridging ligand are linked three-dimensionally, and pores are formed between these polyhedra;
(ii) a metal complex having a structure in which two-dimensional sheets composed of metal ion and first organic bridging ligand form layers, and a second organic bridging ligand capable of bidentate coordination coordinates to metal cations present in each layer, thereby linking adjacent sheets and forming pores between them.

The metal complex in the aforementioned (i) differs from the metal complex in the aforementioned (ii) in that it does not contain a second organic bridging ligand.

The porous metal complex used in the present invention broadly encompasses a porous metal complex known as MOF. The pores of the porous metal complex are preferably linear tunnel-shaped fine pores.

Examples of the metal ion of the porous metal complex include ions of metals belonging to Groups 1 to 13 in the periodic table. Examples of the metal include zinc, copper, aluminum, gold, platinum, silver, ruthenium, tin, palladium, rhodium, iridium, osmium, nickel, cobalt, iron, yttrium, magnesium, manganese, titanium, zirconium, hafnium, calcium, cadmium, vanadium, chromium, molybdenum, scandium, and the like. The metal ion is preferably a metal ion belonging to Groups 6 to 13 in the periodic table, more preferably zinc ion, copper ion, or aluminum ion, further preferably zinc ion.

Examples of the first organic crosslinking ligand of the porous metal complex include
(i) an anion of a compound in which two, three, or four carboxyl groups are bonded to an aromatic compound such as benzene, naphthalene, anthracene, phenanthrene, fluorene, indane, indene, pyrene, 1,4-dihydronaphthalene, tetralin, biphenylene, triphenylene, acenaphthylene, acenaphthene, or the like (the aforementioned compound is optionally substituted by 1 to 3 substituents selected from the group consisting of a halogen atom (e.g., F, Cl, Br, I), a nitro group, an amino group, an acylamino group (e.g., acetylamino group), a cyano group, a hydroxy group, a methylenedioxy group (-O-CH₂-O-), an ethylenedioxy group (-O-CH₂CH₂-O-), a linear or branched alkoxy group having 1 to 4 carbon atoms (e.g., methoxy group, ethoxy group), a linear or branched alkyl group having 1 to 4 carbon atoms (e.g., methyl group, ethyl group, propyl group, tert-butyl group, isobutyl group), -SH, a trifluoromethyl group, a sulfo group, a carbamoyl group, an alkylamino group (e.g., methylamino group), dialkylamino group (e.g., dimethylamino group)),
(ii) an anion of a cyclic saturated aliphatic polyvalent carboxylic acid having 5 to 12 carbon atoms (e.g., 1,2-cis-cyclopropanedicarboxylic acid, 1,2-trans-cyclopropanedicarboxylic acid, 1,3-cis-cyclobutanedicarboxylic acid, 1,3-trans-cyclobutanedicarboxylic acid, 1,4-cis-cyclohexanedicarboxylic acid, 1,4-trans-cyclohexanedicarboxylic acid, 1,3-adamantanedicarboxylic acid),
(iii) an anion of an unsaturated divalent carboxylic acid (e.g., (1α,2α,4α)-1,2,4-cyclohexanetricarboxylic acid, fumaric acid, maleic acid, citraconic acid, itaconic acid), and the like.

The first organic crosslinking ligand is preferably isophthalate ion, 5-methoxyisophthalate ion, 5-methylisophthalate ion, 5-fluoroisophthalate ion, 5-chloroisophthalate ion, 5-bromoisophthalate ion, 5-iodo isophthalate ion, 5-nitroisophthalate ion, 5-cyanoisophthalate ion, terephthalate ion, 2-methylterephthalate ion, 2-methoxyterephthalate ion, 2-nitroterephthalate ion, dihydrocyclobuta[1,2-b]terephthalate ion, 4,4'-dicarbonxydiphenylsulfone, 1,4-naphthalenedicarboxylate ion, 2,6-naphthalenedicarboxylate ion, 9,10-anthracenedicarboxylate ion, 2,3-pyrazinedicarboxylate ion, tetrafluoroterephthalate ion, 4,4'-bibenzoate ion, octafluoro-4,4'-bibenzoate ion, 4,4'-biphenyl dicarboxylate ion, 2,7-fluorenedicarboxylate ion, 2,7-pyrenedicarboxylate ion, 4,5,9,10-tetrahydropyrene-2,7-dicarboxylate ion, succinate ion, maleate ion, fumarate ion, acetylenedicarboxylic acid, or the like, more preferably terephthalate ion or 1,4-naphthalenedicarboxylate ion.

The porous metal complex may contain a monodentate ligand (e.g., O²⁻, H₂O, OH⁻, OF⁻, F⁻) along with the first organic bridging ligand. The crystal size of the complex can be adjusted by using a monodentate ligand.

As the monodentate ligand, a monodentate organic ligand may be used. Examples of the monodentate organic ligand include ions of monocarboxylic acids. Examples of the monocarboxylic acid include formic acid, acetic acid, trifluoroacetic acid, propionic acid, lactic acid, pyruvic acid, butanoic acid, pentanoic acid, hexanoic acid, cyclohexanecarboxylic acid, and the like

Examples of the second organic crosslinking ligand of the porous metal complex include pyrazine, trans-1,2-bis(4-pyridyl) ethylene, 1,4-dicyanobenzene, 4,4'-dicyanobiphenyl, 1,2-dicyanoethylene, 1,4-bis(4-pyridyl)benzene, triethylenediamine, 4,4'-bipyridine, diazapyrene, 2,5-dimethylpyrazine, 2,2'-dimethyl-4,4'-bipyridine, 1,2-bis(4-pyridyl)ethyne, 1,4-bis(4-pyridyl)butadiyne, 1,4-bis(4-pyridyl) benzene, 3,6-di(4-pyridyl)-1,2,4,5-tetrazine, 2,2'-bi-1,6-naphthyridine, phenazine, 2,6-di(4-pyridyl)-benzo[1,2-c:4,5-c']dipyrrole-1,3,5,7(2H,6H)-tetrone, N,N'-di(4-pyridyl)-1,4,5,8-naphthalenetetracarboxydiimide, trans-1,2-bis(4-pyridyl)ethene, 4,4'-azopyridine, 1,2-bis(4-pyridyl)ethane, 4,4'-dipyridylsulfide, 1,3-bis(4-pyridyl)propane, 1,2-bis(4-pyridyl)-glycol, N-(4-pyridyl)isonicotinamide, and the like. Among these, triethylenediamine is preferred.

Porous metal complexes described in known documents (e.g., Angew. Chem. Int. Ed. 2004, 43, 2334-2375.; Angew. Chem. Int. Ed. 2008, 47, 2-14.; Chem. Soc. Rev., 2008, 37, 191-214.; PNAS, 2006, 103, 10186-10191.; Chem.Rev.,2011, 111, 688-764.; Nature, 2003, 423, 705-714.) can be used.

Examples of the porous metal complex include, but are not limited to, the following: CD-MOF-1, CD-MOF-2, CD-MOF-3, CPM-13, FJI-1, FMOF-1, HKUST-1, IRMOF-1, IRMOF-2, IRMOF-3, IRMOF-6, IRMOF-8, IRMOF-9, IRMOF-13, IRMOF-20, JUC-48, JUC-62, MIL-101, MIL-100, MIL-125, MIL-53, MIL-88 (including MIL-88A, MIL-88B, MIL-88C, and MIL-88D series), MOF-5, MOF-74, MOF-177, MOF-210, MOF-200, MOF-205, MOF-505, MOROF-2, MOROF-1, NOTT-100, NOTT-101, NOTT-102, NOTT-103, NOTT-105, NOTT-106, NOTT-107, NOTT-109, NOTT-110, NOTT-111, NOTT-112, NOTT-113, NOTT-114, NOTT-140, NU-100, rho-ZMOF, PCN-6, PCN-6', PCN9, PCN10, PCN12, PCN12', PCN14, PCN16, PCN-17, PCN-21, PCN46, PCN66, PCN68, PMOF-2(Cu), PMOF-3, SNU-5, SNU-15', SNU-21S, SNU-21H, SNU-50, SNU-77H, UiO-66, UiO-67, soc-MOF, sod-ZMOF, TUDMOF-1, UMCM-2, UMCM-150, UTSA-20, ZIF-2, ZIF-3, ZIF-4, ZIF-8, ZIF-9, ZIF-10, ZIF-11, ZIF-12, ZIF-14, ZIF-20, ZIF-21, ZIF-23, ZIF-60, ZIF-61, ZIF-62, ZIF-64, ZIF-65, ZIF-67, ZIF-68, ZIF-69, ZIF-70, ZIF-71, ZIF-72, ZIF-73, ZIF-74, ZIF-75, ZIF-76, ZIF-77, and ZIF-90.

Specific examples of the porous metal complex include the following:
Zn₂(1,4-benzenedicarboxylate)₂triethylenediamine (pore size = 7.5Å),
Zn₂(1,4-naphthalenedicarboxylate)₂triethylenediamine (pore size = 5.7Å),
IRMOF-1, i.e., Zn₄O(BDC)₃ (BDC = 1,4-benzenedicarboxylate, pore size = 15.0Å),
MOF-69C, i.e., Zn₃(OH)₂(BDC)₂ (pore size = 6.5Å),
MOF-74, i.e., M₂(DOBDC) (DOBDC = 2,5-dihydroxyterephthalate, M = Zn, Co, Ni, or Mg, pore size = 11.0 Å),
HKUST-1, i.e., Cu₃(BTC)₂ (BTC = 1,3,5-benzenetricarboxylate, pore size = 9.0Å),
MOF-177, i.e., Zn₄O(BTB)₂ (BTB = 4,4',4"-benzene-1,3,5-triyl-tribenzoate, pore size = 11.8Å),
MOF-508, i.e., Zn(BDC) (bpy)_{0.5} (bpy = 4,4'-bipyridine, pore size = 4.0Å),
Zn-BDC-DABCO, i.e., Zn₂(BDC)₂(DABCO) (DABCO = 1,4-diazabicyclo[2.2.2]-octane, pore size = 7.5Å),
Cr-MIL-101, i.e., Cr₃F(H₂O)₂O(BDC)₃ (pore size = 29.0Å),
Al-MIL-110, i.e., Al₈(OH)₁₂[(OH)₃(H₂O)₃](BTC)3 (pore size = 16.0Å),
MIL-103, i.e., M(BTB) (M = light rare-earth element = any of La (lanthanum) to Ho (holmium), pore size = 10.7Å),
Al-MIL-53, i.e., Al(OH) (BDC) (pore size = 8.5Å),
ZIF-8, i.e., Zn(MeIM)₂ (MeIM = 2-methylimidazole, pore size = 12.0Å),
MIL-88B, i.e., Cr₃OF(BDC)₃ (pore size = 15.6Å),
MIL-88C, i.e., Fe₃O(NDC)₃ (NDC = 2,6-naphthalenedicarboxylate, pore size = 18.7Å),
MIL-88D, i.e., Cr₃OF(BPDC)₃(BPDC = 4,4'-biphenyldicarboxylate, pore size = 20.5Å),
CID-1, i.e., Zn₂(ip)₂(bpy)₂ (ip = isophthalate, bpy = 4,4'-bipyridine, pore size = 5.0Å),
ZrO(BPCD) (pore size = 6.4Å),
Al(OH)(NDC) (pore size = 8.5Å).

The porous metal complex is preferably at least one selected from the group consisting of Zn₂(1,4-benzenedicarboxylate)₂triethylenediamine and Zn₂(1,4-naphthalenedicarboxylate)₂triethylenediamine, more preferably Zn₂(1,4-benzenedicarboxylate)₂triethylenediamine or Zn₂(1,4-naphthalenedicarboxylate)₂triethylenediamine.

The porous metal complex can be produced by a known method (e.g., the method described in Chun, H. et. al., Chem. Eur. J. 2005, 11, 3521-3529).

### (Method for producing highly-pure branched polyethylene glycol compound)

The method for producing a highly-pure branched PEG compound (hereinafter sometimes to be abbreviated as "branched PEG compound") of the present invention includes:
step (1) of mixing a mixture containing a branched PEG compound and a linear polyethylene glycol compound (hereinafter sometimes to be abbreviated as "linear PEG compound") as an impurity with a porous metal complex in the presence or absence of a solvent to adsorb the linear PEG compound onto the porous metal complex,
step (2a) of removing the porous metal complex adsorbing the linear PEG compound from a mixture containing the branched PEG compound and the porous metal complex adsorbing the linear PEG compound to obtain a solution containing the branched PEG compound, when the mixing in step (1) is performed in the presence of a solvent, or
step (2b) of mixing a solvent and the mixture containing the branched PEG compound and the porous metal complex adsorbing the linear PEG compound, and removing, from a thus-obtained mixture, the porous metal complex adsorbing the linear PEG compound to obtain a solution containing the branched PEG compound, when the mixing in step (1) is performed in the absence of a solvent, and
step (3) of recovering the branched PEG compound from the solution containing the branched-chain PEG compound.

### <Step (1)>

The mixing in step (1) is performed in the presence or absence of a solvent. In the present specification, "step (1) including mixing in the presence of a solvent" may be referred to as "step (1a)" and "step (1) including mixing in the absence of a solvent" may be referred to as "step (1b)".

The amount of the porous metal complex to be used in step (1a) or step (1b) is preferably 15 to 105 parts by mass, more preferably 25 to 95 parts by mass, per 100 parts by mass of the branched chain PEG compound, from the viewpoint of operability and separation.

Step (1) is preferably step (1a). Therefore, the production method of the present invention preferably includes step (1a), step (2a), and step (3). The solvent used in step (1a) is preferably at least one selected from the group consisting of N,N-dimethylformamide (DMF), ethanol, ethyl acetate, chloroform, and toluene, more preferably DMF or toluene.

The amount of the solvent to be used in step (1a) is preferably 250 to 400 parts by mass, more preferably 300 to 360 parts by mass, per 100 parts by mass of the branched chain PEG compound, from the viewpoint of the viscosity of the mixture in step (1).

The mixing temperature in step (1a) or step (1b) is preferably 25 to 150°C, more preferably 60 to 100°C, and the mixing time is preferably 1 to 24 hr, more preferably 2 to 8 hr.

The mixing in step (1a) or step (1b) may be performed under an atmospheric environment or under an inert atmosphere (e.g., nitrogen atmosphere). From the viewpoint of convenience, it is preferable to carry out the mixing in step (1a) or step (1b) under an atmospheric environment.

### <Step (2a) or step (2b)>

Step (2a) is performed after step (1a), and step (2b) is performed after step (1b).

A solvent may be added to the mixture obtained in step (1a), and the obtained mixture (i.e., dilution product) may be used in step (2a). The solvent is at least one selected from the group consisting of N,N-dimethylformamide (DMF), ethanol, ethyl acetate, chloroform, and toluene, more preferably DMF, chloroform, or toluene. The amount of the aforementioned solvent to be used is preferably 500 to 2000 parts by mass, more preferably 1000 to 1400 parts by mass, per 100 parts by mass of the branched PEG compound, from the viewpoint of the viscosity of the aforementioned dilution product.

In step (2a), the porous metal complex adsorbing the linear PEG compound is removed from a mixture containing the branched PEG compound and the porous metal complex adsorbing the linear PEG compound(for example, the mixture obtained in step (1a) or dilution product thereof), to obtain a solution containing the branched PEG compound.

In step (2b), a mixture containing the branched PEG compound and the porous metal complex adsorbing the linear PEG compound is mixed with a solvent. The porous metal complex adsorbing the linear PEG compound is then removed from the thus-obtained mixture to obtain a solution containing the branched PEG compound.

The solvent used in step (2b) is preferably at least one selected from the group consisting of N,N-dimethylformamide (DMF), ethanol, ethyl acetate, chloroform, and toluene, and more preferably chloroform. From the viewpoint of the viscosity of the mixture in step (2b), the amount of the solvent to be used in step (2b) is preferably 1000 to 1200 parts by mass, more preferably 800 to 1000 parts by mass, per 100 parts by mass of the branched PEG compound.

In step (2b), the mixing temperature of the mixture containing the branched PEG compound and the porous metal complex adsorbing the linear PEG compound with the solvent is preferably 20 to 50°C, more preferably 25 to 45°C, and the mixing time is preferably 5 to 30 min, more preferably 10 to 20 min.

The mixing in step (2b) may be performed under an atmospheric environment or under an inert atmosphere (e.g., nitrogen atmosphere). From the viewpoint of convenience, it is preferable to perform the mixing in step (2b) under an atmospheric environment.

In step (2a) or step (2b), the means for removing the porous metal complex adsorbing the linear PEG compound is not particularly limited, and the aforementioned porous metal complex can be removed by known means (e.g., filtration or centrifugation).

### <Step (3)>

In step (3), the branched chain PEG compound is recovered from the solution containing the branched chain PEG compound. The recovery means is not particularly limited and the branched chain PEG compound can be recovered by known means (e.g., solvent removal or solid-liquid separation by addition of poor solvent).

When the solvent is removed from the solution containing the branched chain PEG compound, the temperature is preferably 20 to 60°C, more preferably 35 to 45°C, the pressure is preferably 2 to 20 kPa, more preferably 5 to 15 kPa, and the time is preferably 0.5 to 4 hr, more preferably 1 to 2 hr.

The poor solvent for solid-liquid separation is preferably at least one selected from the group consisting of n-hexane, diethyl ether, and methyl tert-butyl ether, more preferably n-hexane. The amount of the poor solvent to be used is preferably 100 to 200 parts by mass, more preferably 120 to 180 parts by mass, per 100 parts by mass of the solvent in the solution containing the branched-chain PEG compound. The temperature when adding the poor solvent to the solution containing the branched-chain PEG compound is preferably 25 to 45°C, more preferably 30 to 40°C.

The solid containing the branched-chain PEG compound precipitated by the addition of the poor solvent can be recovered by known means (e.g., filtration or centrifugation).

The mixture containing the branched-chain PEG compound and the linear-chain PEG compound used in step (1a) or step (1b) is preferably obtained by the following steps (P1) and (P2). That is, the production method of the present invention preferably includes steps (P1), (P2), (1a), (2a), and (3), or includes steps (P1), (P2), (1b), (2b), and (3), more preferably includes steps (P1), (P2), (1a), (2a), and (3).

### <Step (P1)>

Step (P1) is a step of subjecting a portion of a polyol compound represented by any of the following formula (iiia) to formula (iic) (hereinafter sometimes abbreviated as "polyol compound") to alcholate formation.

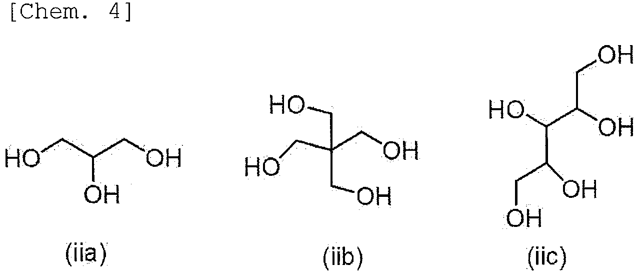

The reactant for alcholate formation of the polyol compound is preferably an alkali metal salt such as sodium methoxide or potassium hydroxide. The amount of the reactant (preferably an alkali metal salt) to be used is preferably 5 to 50 mol%, more preferably 15 to 40 mol%, relative to the polyol compound, from the viewpoint of the rate of addition polymerization of ethylene oxide in step (P2). Here, "amount of reactant to be used relative to the polyol compound" means "100 × amount of reactant (mol)/amount of polyol compound (mol)".

When the amount of the reactant (preferably an alkali metal salt) used relative to the polyol compound in step (P1) is less than 5 mol%, the rate of addition polymerization of ethylene oxide in step (P2) slows down, the thermal history increases, and impurities such as terminal vinyl ethers are generated. Therefore, it is advantageous to use an amount of 5 mol% or more for producing high-quality high molecular weight products. Furthermore, when the amount used exceeds 50 mol%, the viscosity of the reaction mixture increases or the mixture solidifies during the alcholate reaction, which in turn reduces stirring efficiency and hinders alcholate formation.

The reaction temperature between the polyol compound and the reactant (preferably an alkali metal salt) is preferably 10 to 50°C, more preferably 20 to 40°C. When this reaction temperature is higher than 50°C, a decomposition reaction of the polyol compound occurs, generating low molecular weight impurities. When this reaction temperature is lower than 10°C, the viscosity of the reaction mixture increases or the mixture solidifies, making handling difficult.

The reaction time of the alcholate formation in step (P1) is preferably 1 to 24 hr, more preferably 6 to 18 hr. When the reaction time is shorter than 1 hr, the alcholate reaction may not proceed sufficiently. When the reaction time is longer than 24 hr, a decomposition reaction of the polyol compound may occur.

The alcholate reaction in step (P1) is preferably performed in the presence of an aprotic solvent. Examples of the aprotic solvent include toluene, benzene, xylene, acetonitrile, ethyl acetate, tetrahydrofuran, chloroform, methylene chloride, dimethyl sulfoxide, N,N-dimethylformamide, dimethylacetamide, and the like. Only one kind of aprotic solvent may be used, or two or more kinds thereof may be used in combination. Toluene is preferred as the aprotic solvent. The alcholate reaction in step (P1) may also be performed under solvent-free conditions.

When an aprotic solvent is used, the amount thereof to be used is preferably 1000 to 3000 parts by mass, more preferably 1500 to 2500 parts by mass, per 100 parts by mass of the polyol compound.

In step (P1), in order to promote the alcholate reaction, the alcholate reaction is performed under reduced pressure while removing low molecular weight compounds produced in the alcholate reaction (for example, methanol produced by the reaction of the polyol compound with sodium methoxide, or water produced by the reaction of the polyol compound with potassium hydroxide). Therefore, the pressure during the alcholate reaction is preferably 5 to 35 kPa, more preferably 10 to 30 kPa.

In step (P1), a mixture containing the polyol compound and alcholate (hereinafter abbreviated as "the mixture of step (P1)") is obtained.

### <Step (P2)>

Step (P2) is a step in which addition polymerization of ethylene oxide is performed. Specifically, in step (P2), addition polymerization is performed by supplying ethylene oxide to the mixture of step (P1). The ethylene oxide supply rate (g/h/mol) is preferably 50 to 250 g/h/mol, more preferably 100 to 200 g/h/mol, from the viewpoint of reaction pressure and safety. The "ethylene oxide supply rate (g/h/mol)" refers to the amount of ethylene oxide (g) supplied per hr per 1 mol of the total of the polyol compound and alkoxide.

The temperature of the addition polymerization of ethylene oxide is preferably 50 to 130°C, more preferably 60 to 120°C. When this temperature is lower than 50°C, the rate of addition polymerization is slow and the thermal history increases, which tends to result in a degraded quality of the obtained branched-chain PEG compound. When this temperature is higher than 130°C, side reactions such as vinyl etherification of the terminal occur during addition polymerization, which tends to degrade the quality of the obtained branched-chain PEG compound. The time of addition polymerization is not particularly limited and the addition polymerization may be performed until a branched-chain PEG compound with the desired molecular weight is obtained.

The addition polymerization of ethylene oxide is preferably performed in the presence of an aprotic solvent. Examples of the aprotic solvent include toluene, benzene, xylene, acetonitrile, ethyl acetate, tetrahydrofuran, chloroform, methylene chloride, dimethyl sulfoxide, N,N-dimethylformamide, dimethylacetamide, and the like. Only one kind of aprotic solvent may be used, or two or more kinds thereof may be used in combination. Toluene is preferred as the aprotic solvent.

When an aprotic solvent is used, the amount thereof to be used is preferably 200 to 1800 parts by mass, more preferably 500 to 1500 parts by mass, per 100 parts by mass of the mixture in step (P1).

After the addition polymerization in step (P2), the reaction mixture is preferably treated with an acid such as phosphoric acid. Through this acid treatment, a mixture is obtained which contains, as a branched-chain PEG compound, compound (I) of the formula (I), where m is 0, s is 3 to 5, n in the number of s are both numbers of from 20 to 2000, X in the number of s are hydroxy groups, and E is a linker represented by any of the formula (IIa) to the formula (IIc), and a linear-chain PEG compound as an impurity (hereinafter abbreviated as "the mixture of step (P2)").

When the addition polymerization of ethylene oxide in step (P2) is performed in the presence of an aprotic solvent, the mixture of step (P2) can be recovered from the solution containing the mixture of step (P2), and the obtained mixture can be used to perform step (1) (i.e., step (1a) or step (1b)). The recovery means is not particularly limited, and the mixture of step (P2) can be recovered by known means (e.g., solvent removal or solid-liquid separation by addition of poor solvent).

When the solvent is removed from the solution containing the mixture of step (P2) by distillation, the temperature therefor is preferably 30 to 70°C, more preferably 40 to 60°C, the pressure is preferably 2 to 20 kPa, more preferably 5 to 15 kPa, and the time is preferably 0.5 to 4 hr, more preferably 1 to 2 hr.

The poor solvent for solid-liquid separation is preferably at least one selected from the group consisting of n-hexane, diethyl ether, and methyl tert-butyl ether, more preferably n-hexane. The amount of the poor solvent to be used is preferably 500 to 3000 parts by mass, more preferably 1000 to 3000 parts by mass, per 100 parts by mass of the solvent in the solution containing the mixture of step (P2). The temperature when adding the poor solvent to the solution containing the mixture of step (P2) is preferably 25 to 45°C, more preferably 30 to 40°C.

The mixture of step (P2) can be used to perform step (1) (i.e., step (1a) or step (1b)). That is, in step (1), the mixture of step (P2) and the porous metal are mixed in the presence or absence of a solvent, whereby the linear PEG compound is adsorbed onto the porous metal complex.

When the addition polymerization of ethylene oxide in step (P2) is performed in the presence of an aprotic solvent, the solution containing the obtained mixture of step (P2) can be used to perform step (1a). That is, in step (1a), the porous metal and the solution containing the mixture of step (P2) are mixed, whereby the linear PEG compound is adsorbed onto the porous metal complex.

### [Example]

The present invention is explained more specifically in the following by referring to Examples. The present invention is not limited by the embodiments of the Examples.

In Examples, the following porous metal complexes were used.
MOF (1): Zn₂(1,4-benzenedicarboxylate)₂triethylenediamine (pore size: 0.75 nm) (manufactured by Atomis Inc. "AP3025")
MOF (2): Zn₂(1,4-naphthalenedicarboxylate)₂triethylenediamine (pore size: 0.57 nm) (produced by the method described in nature communication (2018) 9; 3635)

The pore sizes of MOF (1) and MOF (2) were measured by nitrogen gas adsorption.

Hereafter, "polyethylene glycol" may be abbreviated as "PEG".

In Examples 1 to 9 below, "PEG mixture" means a mixture containing a branched PEG compound and a linear PEG compound that have not been treated with a porous metal complex. The aforementioned PEG mixture does not contain a solvent.

In Examples 1 to 9 below, "main fraction purity" means the purity of the branched PEG compound, and "linear PEG content" means the content of the linear PEG compound.

In Comparative Example 1 below, "PEG mixture" means a mixture containing a high molecular-weight branched PEG compound with Mn 40,000 and a low molecular-weight branched PEG compound with Mn 20,000 that have not been treated with a porous metal complex. The aforementioned PEG mixture does not contain a solvent.

In Comparative Example 1 below, "main fraction purity" refers to the purity of the high molecular-weight branched PEG compound, and "low molecular-weight PEG content" refers to the content of the low molecular-weight branched PEG compound.

### (Evaluation method)

(i) The Mn of the PEG compounds used in Examples 1 to 9 and Comparative Example 1 below, and
(ii) The main fraction purity, linear PEG content (or low molecular-weight PEG content), and polydispersity (hereinafter abbreviated as "Mw/Mn") of the raw materials (PEG mixtures) used in Examples 1 to 7 and 9 and Comparative Example 1 below and the obtained target products
were calculated by gel permeation chromatography (GPC) measurement (reference: polyethylene glycol) under the following conditions. The Mw/Mn of the raw materials (PEG mixtures) used in Example 8 and the Mw/Mn of the obtained target products were not calculated.

### <GPC measurement conditions>

instrument: "Prominence" manufactured by Shimadzu Corporation
detector: RI
column: PLgel 5 µm MIXED-D 300×7.5 mm (2 columns linked)
mobile phase: N,N-dimethylformamide
flow rate: 0.7 mL/min

The main fraction purity and linear PEG content of the raw materials (PEG mixtures) used in Example 8 and the obtained target product were calculated by derivatizing the hydroxy group at the PEG terminal with 3,5-dinitrobenzoyl chloride, followed by reversed-phase high-performance liquid chromatography (RP-HPLC) measurement under the following conditions.

### <RP-HPLC measurement conditions>

instrument: "Alliance" manufactured by Waters Corporation
detector: UV (210 nm)
column: Zorbax 300SB-C18 (3.0×150 mm)
mobile phase A: water
mobile phase B: acetonitrile
flow rate: 0.6 mL/min
gradient conditions: as shown in Table 1.

**[Table 1]**

| time | 0 - 16 min | 16 - 20 min | 20 - 22 min | after 22 min |
|---|---|---|---|---|
| mobile phase B (% by volume) | 55 | 60 | 100 | 55 |

### (Example 1)

A PEG mixture (main fraction purity = 95.98%, linear PEG content = 3.32% by mass, Mw/Mn = 1.033, 0.3 g) containing a branched PEG compound represented by the following formula (III) (Mn = 41,223) and a linear PEG compound represented by the following formula (IV) (Mn = 20,857), and MOF (2) (0.1 g) were weighed into a glass flask and mixed with N,N-dimethylformamide (DMF) (0.9 g). The mixture was stirred at 80°C for 5 hr, and after cooling, diluted with chloroform (3 g), and MOF (2) and the solution containing the branched PEG were separated by centrifugation. The solvent of the obtained solution was removed by distillation under the conditions of temperature: 40°C and pressure: 10 KPa for 1 hr to obtain the target product. The main fraction purity of the target product was 97.04%, the linear PEG content was 2.36% by mass, and the Mw/Mn was 1.029.

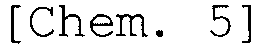

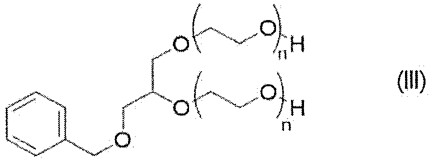

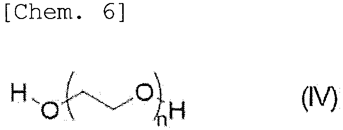

### (Example 2)

A PEG mixture (main fraction purity = 88.05%, linear PEG content = 11.63% by mass, Mw/Mn = 1.068) containing a branched PEG compound represented by the above-mentioned formula (III) (Mn = 40,376, main fraction purity = 99.33%, linear PEG content = 0% by mass, Mw/Mn = 1.024, 0.27 g) and a linear PEG compound represented by the following formula (IV) (Mn = 20,598, 0.03 g), and MOF (2) (0.225 g) were weighed into a glass flask and mixed with N,N-dimethylformamide (0.9 g). The mixture was stirred at 80°C for 2 hr, and after cooling, diluted with chloroform (3 g), and MOF (2) and the solution containing the branched PEG compound were separated by centrifugation. The solvent of the obtained solution was removed by distillation under the conditions of temperature: 40°C and pressure: 10 KPa for 1 hr to obtain the target product. The main fraction purity of the obtained target product was 92.19%, the linear PEG content was 7.30% by mass, and the Mw/Mn was 1.051.

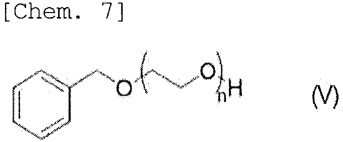

In Example 2, a PEG mixture obtained by adding the linear PEG compound represented by the above-mentioned formula (V) to the branched PEG compound represented by the above-mentioned formula (III) was used. The terminal functional groups of both the branched PEG compound and the linear PEG compound are hydroxy groups and benzyloxy groups, and the difference between these two PEG compounds is the branched or linear structure. The main fraction purity of the target product obtained by the method of Example 2 is improved compared to the main fraction purity of the PEG mixture. It is clear that, by the production method of the present invention, a linear PEG compound can be removed from a PEG mixture and a highly-pure branched PEG compound can be obtained, even without differences in terminal functional groups.

### (Example 3)

A PEG mixture (main fraction purity = 87.74%, linear PEG content = 11.62% by mass, Mw/Mn = 1.042) containing a branched PEG compound represented by the following formula (VI) (Mn = 34,302, main fraction purity = 95.74%, linear PEG content = 3.32% by mass, Mw/Mn = 1.044, 0.27 g) and a linear PEG compound represented by the above-mentioned formula (IV) (Mn = 21,172, 0.03 g), and MOF (2) (0.225 g) were weighed into a glass flask and mixed with N,N-dimethylformamide (0.9 g). The mixture was stirred at 80°C for 2 hr, and after cooling, diluted with N,N-dimethylformamide (3 g), and MOF (2) and the solution containing the branched PEG compound were separated by filtration. To the obtained solution was added n-hexane (6.0 g) at 35°C to precipitate the branched PEG compound. The precipitated solid was recovered by filtration to obtain the target product. The main fraction purity of the target product was 92.55%, the linear PEG content was 7.00% by mass, and the Mw/Mn was 1.032.

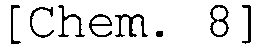

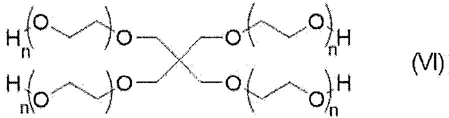

In Example 3, a PEG mixture obtained by adding the linear PEG compound represented by the above-mentioned formula (IV) to the branched PEG compound represented by the above-mentioned formula (VI) was used. The terminal functional groups of both the branched PEG compound and the linear PEG compound are hydroxy groups, and the differences between these two PEG compounds are the presence or absence of a branched structure and the molecular weight. The main fraction purity of the target product obtained by the method in Example 3 is improved compared to the main fraction purity of the PEG mixture. Therefore, it is clear that the production method of the present invention removes a linear PEG compounds from a PEG mixture, even without differences in terminal functional group, to obtain a highly-pure branched PEG compound.

### (Example 4)

A PEG mixture (main fraction purity = 89.28%, linear PEG content = 10.22% by mass, Mw/Mn = 1.077) containing a branched PEG compound represented by the above-mentioned formula (III) (Mn = 40,488, main fraction purity = 99.33%, linear PEG content = 0% by mass, Mw/Mn = 1.024, 0.27 g) and a linear PEG compound represented by the above-mentioned formula (IV) (Mn = 18,945, 0.03 g), and MOF (1) (0.225 g) were weighed into a glass flask and mixed with toluene (0.9 g). The mixture was stirred at 80°C for 2 hr, and after cooling, diluted with toluene (3 g), and then MOF (1) and the solution containing the branched PEG were separated by filtration. To the obtained solution was added n-hexane (6.0 g) at 35°C to precipitate the branched PEG compound. The precipitated solid was recovered by filtration to obtain the target product. The main fraction purity of the obtained target product was 99.41%, the linear PEG content was 0% by mass, and the Mw/Mn was 1.020.

### (Example 5)

A PEG mixture (main fraction purity = 88.07%, linear PEG content = 11.93% by mass, Mw/Mn = 1.070) containing a branched PEG compound represented by the above-mentioned formula (III) (Mn = 19,774, main fraction purity = 98.27%, linear PEG content = 1.72% by mass, Mw/Mn = 1.038, 0.27 g) and a linear PEG compound represented by the above-mentioned formula (IV) (Mn = 9,943, 0.03 g), and MOF (1) (0.225 g) were weighed into a glass flask and mixed with toluene (0.9 g). The mixture was stirred at 80°C for 2 hr, and after cooling, diluted with toluene (3 g), and then MOF (1) and the solution containing the branched PEG were separated by filtration. To the obtained solution was added n-hexane (6.0 g) at 35°C to precipitate the branched PEG compound. The precipitated solid was recovered by filtration to obtain the target product. The main fraction purity of the obtained target product was 98.95%, the linear PEG content was 0% by mass, and Mw/Mn = 1.027.

### (Example 6)

A PEG mixture (main fraction purity = 90.73%, linear PEG content = 9.37% by mass, Mw/Mn = 1.132) containing a branched PEG compound represented by the above-mentioned formula (III) (Mn = 5,386, main fraction purity = 100.00%, linear PEG content = 0% by mass, Mw/Mn 1.021, 0.27 g) and a linear PEG compound represented by the above-mentioned formula (IV) (Mn = 1,829, 0.03 g), and MOF (1) (0.225 g) were weighed into a glass flask and mixed with toluene (0.9 g). The mixture was stirred at 80°C for 2 hr, and after cooling, diluted with toluene (3 g), and then MOF (1) and the solution containing the branched PEG were separated by filtration. To the obtained solution was added n-hexane (6.0 g) at 35°C to precipitate the branched PEG compound. The precipitated solid was recovered by filtration to obtain the target product. The main fraction purity of the obtained target product was 100%, the linear PEG content was 0% by mass, and Mw/Mn = 1.021.

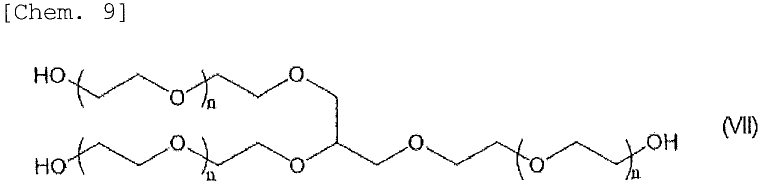

### (Example 7)

A PEG mixture (main fraction purity = 90.11%, linear PEG content = 9.89% by mass, Mw/Mn = 1.108) containing a branched PEG compound represented by the above-mentioned formula (VII) (Mn = 4,689, main fraction purity = 100.00%, linear PEG content = 0% by mass, Mw/Mn 1.020, 0.27 g) and a linear PEG compound represented by the above-mentioned formula (IV) (Mn = 1,810, 0.03 g), and MOF (1) (0.225 g) were weighed into a glass flask and mixed with toluene (0.9 g). The mixture was stirred at 80°C for 2 hr, and after cooling, diluted with toluene (3 g), and then MOF (1) and the solution containing the branched PEG were separated by filtration. To the obtained solution was added n-hexane (6.0 g) at 35°C to precipitate the branched PEG compound. The precipitated solid was recovered by filtration to obtain the target product. The main fraction purity of the obtained target product was 100%, the linear PEG content was 0% by mass, and Mw/Mn = 1.020.

### (Example 8)

A PEG mixture (main fraction purity = 90.03%, linear PEG content = 9.97% by mass) containing a branched PEG compound represented by the above-mentioned formula (VI) (Mn = 18,091, main fraction purity = 97.30%, linear PEG content = 2.70% by mass, 0.27 g) and a linear PEG compound represented by the above-mentioned formula (IV) (Mn = 18,628, 0.03 g), and MOF (1) (0.225 g) were weighed into a glass flask and mixed with toluene (0.9 g). The mixture was stirred at 80°C for 2 hr, and after cooling, diluted with toluene (3 g), and then the MOF (1) and the solution containing the branched PEG were separated by filtration. To the obtained solution was added n-hexane (6.0 g) at 35°C to precipitate the branched PEG compound. The precipitated solid was recovered by filtration to obtain the target product. The main fraction purity of the obtained target product was 95.93%, and the linear PEG content was 4.07% by mass.

In Example 8, the PEG mixture containing the branched PEG compound and the linear PEG compound having similar Mn contents was used. Since the main fraction purity of the target product obtained by the method of Example 8 was improved compared to the main fraction purity of the PEG mixture, it is clear that, even if a branched PEG compound and a linear PEG compound contained in a PEG mixture have similar Mn contents, the production method of the present invention removes the linear PEG compound from the PEG mixture to obtain the highly-pure branched PEG compound.

### (Example 9)

A PEG mixture (main fraction purity = 96.21%, linear PEG content = 3.33% by mass, Mw/Mn = 1.034, 0.1 g) containing a branched PEG compound represented by the above-mentioned formula (III) (Mn = 40,971) and a linear PEG compound represented by the above-mentioned formula (IV) (Mn = 20,487), and MOF (2) (0.085 g) were weighed into a glass flask and mixed. The mixture was stirred at 80°C for 2 hr, and after cooling, diluted with chloroform (3 g), and MOF (2) and the solution containing the branched PEG compound were separated by centrifugation. The solvent of the obtained solution was removed by distillation under the conditions of temperature: 40°C and pressure: 10 KPa for 1 hr to obtain the target product. The main fraction purity of the obtained target product was 97.08%, the linear PEG content was 2.45% by mass, and the Mw/Mn ratio was 1.029.

### (Comparative Example 1)

A PEG mixture (main fraction purity = 88.58%, low molecular-weight PEG content = 10.81% by mass, Mw/Mn = 1.068) containing a high molecular-weight branched PEG compound represented by the above-mentioned formula (III) (Mn = 40,551, main fraction purity = 95.98%, low molecular-weight PEG content = 3.32% by mass, Mw/Mn = 1.033, 0.27 g), and a molecular-weight branched PEG compound represented by the above-mentioned formula (III) (Mn = 20,124, 0.03 g)low molecular-weight, and MOF (2) (0.225 g) were weighed into a glass flask and mixed with N,N-dimethylformamide (0.9 g). The mixture was stirred at 80°C for 2 hr, and after cooling, diluted with N,N-dimethylformamide (3 g). The MOF (2) and the solution containing the branched PEG were separated by filtration. To the obtained solution was added n-hexane (6.0 g) at 35°C to precipitate the branched PEG compound. The precipitated solid was recovered by filtration to obtain the target product. The main fraction purity of the obtained target product was 88.87%, the low molecular-weight PEG content was 10.84% by mass, and Mw/Mn = 1.067.

In Comparative Example 1, the PEG mixture obtained by adding the branched PEG compound represented by the above-mentioned formula (III) with a different molecular weight to the branched PEG compound represented by the above-mentioned formula (III) was used. Both of these PEG compounds have a branched structure, and the difference between them is the molecular weight. Since the main fraction purity of the target product obtained by the method of Comparative Example 1 did not improve compared to the main fraction purity of the PEG mixture, it is clear that in PEG compounds having a branched chain structure, a PEG compound having a branched chain structure with different molecular weight cannot be sufficiently removed, and a highly-pure branched chain PEG compound cannot be obtained.

In the following Table 2, the branched chain PEG compound, linear PEG compound (low molecular-weight branched PEG compound of Comparative Example 1), porous metal complex used (indicated as "MOF" in Table 2), solvent used in step (1a) (indicated as labeled "solvent" in Table 2), mixing temperature in step (1a) or step (1b) (indicated as "mixing temperature" in Table 2), means for removing the porous metal complex (indicated as "removal of MOF" in Table 2), main fraction purity and Mw/Mn of the PEG mixture, and main fraction purity and Mw/Mn of the target product are shown. In Example 8, the Mw/Mn of the PEG mixture and the Mw/Mn of the target product were not calculated.

**[Table 2]**

| | branched PEG compound | | linear PEG compound *¹ | | MOF | solvent | mixing temperature (°C)*² | removal of MOF | PEG mixture | | target product | |
|---|---|---|---|---|---|---|---|---|---|---|---|---|
| | structure | Mn | structure | Mn | | | | | main fraction purity (%) | Mw/Mn | main fraction purity (%) | Mw/Mn |
| Ex. 1 | (III) | 41,223 | (IV) | 20,857 | (2) | DMF | 80 | centrifugation | 95.98 | 1.033 | 97.04 | 1.029 |
| Ex. 2 | (III) | 40,376 | (V) | 20,598 | (2) | DMF | 80 | centrifugation | 88.05 | 1.068 | 92.19 | 1.051 |
| Ex. 3 | (VI) | 34,302 | (IV) | 21,172 | (2) | DMF | 80 | filtration | 87.74 | 1.042 | 92.55 | 1.032 |
| Ex. 4 | (III) | 40,488 | (IV) | 18,945 | (1) | toluene | 80 | filtration | 89.28 | 1.077 | 99.41 | 1.020 |
| Ex. 5 | (III) | 19,774 | (IV) | 9,943 | (1) | toluene | 80 | filtration | 88.07 | 1.070 | 98.95 | 1.027 |
| Ex. 6 | (III) | 5,386 | (IV) | 1,829 | (1) | toluene | 80 | filtration | 90.73 | 1.132 | 100 | 1.021 |
| Ex. 7 | (VII) | 4,689 | (IV) | 1,810 | (1) | toluene | 80 | filtration | 90.11 | 1.108 | 100 | 1. 020 |
| Ex. 8 | (VI) | 18,091 | (IV) | 18,621 | (1) | toluene | 80 | filtration | 90.03 | - | 95.93 | - |
| Ex. 9 | (III) | 40,971 | (IV) | 20,487 | (2) | - | 80 | centrifugation | 96.21 | 1.034 | 97.08 | 1.029 |
| Comp. Ex. 1 | (III) | 40,551 | (III) | 20,124 | (2) | DMF | 80 | filtration | 88.58 | 1.068 | 88.87 | 1.067 |

| | | | | | | | | | | | | |
|---|---|---|---|---|---|---|---|---|---|---|---|---|
| *1 In Comparative Example 1, a low molecular-weight branched PEG compound. *2 In Example 9, mixing temperature of step (1b). In others, mixing temperature of step (1a). | | | | | | | | | | | | |

### [Industrial Applicability]

According to the present invention, a highly-pure branched polyethylene glycol compound can be obtained. Such a highly-pure branched polyethylene glycol compound can be used, for example, for medical purposes.

This application is based on a patent application No. 2023-169554 filed in Japan, the contents of which are incorporated in full herein.

## Claims

1. A method for producing a highly-pure branched polyethylene glycol compound, comprising
step (1a) of mixing a mixture containing a branched polyethylene glycol compound and a linear polyethylene glycol compound as an impurity with a porous metal complex in the presence of a solvent to adsorb the linear polyethylene glycol compound onto the porous metal complex,
step (2a) of removing the porous metal complex adsorbing the linear polyethylene glycol compound from a mixture containing the branched polyethylene glycol compound and the porous metal complex adsorbing the linear polyethylene glycol compound to obtain a solution containing the branched polyethylene glycol compound, and
step (3) of recovering the branched polyethylene glycol compound from the solution containing the branched-chain polyethylene glycol compound.

2. A method for producing a highly-pure branched polyethylene glycol compound, comprising
step (1b) of mixing a mixture containing a branched polyethylene glycol compound and a linear polyethylene glycol compound as an impurity with a porous metal complex in the absence of a solvent to adsorb the linear polyethylene glycol compound onto the porous metal complex,
step (2b) of mixing a solvent and a mixture containing the branched polyethylene glycol compound and the porous metal complex adsorbing the linear polyethylene glycol compound, and removing, from a thus-obtained mixture, the porous metal complex adsorbing the linear polyethylene glycol compound to obtain a solution containing the branched polyethylene glycol compound, and
step (3) of recovering the branched polyethylene glycol compound from the solution containing the branched-chain polyethylene glycol compound.

3. The production method according to claim 1 or 2, wherein the branched polyethylene glycol compound is a branched compound represented by the formula (I): 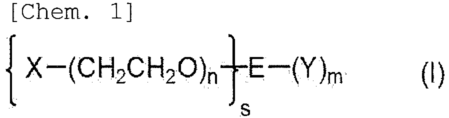 wherein m is 0 or 1,
when m is 0, then s is an integer of 3 to 9, and when m is 1, then s is an integer of 2 to 8,
n in the number of s are each independently a number between 20 and 2000,
Y and X in the number of s are each independently a hydroxy group optionally substituted by a substituent, and
E is a linker with a (s+m) valency.

4. The production method according to claim 3, wherein the substituent is a methyl group, an ethyl group, a propyl group, an isopropyl group, a butyl group, an isobutyl group, a sec-butyl group, a tert-butyl group, a pentyl group, an isopentyl group, a hexyl group, an isohexyl group, a heptyl group, an isoheptyl group, a phenyl group, a benzyl group, a trityl group, a tert-butyldimethylsilyl group, or a tert-butyldiphenylsilyl group.

5. The production method according to claim 3, wherein E is a linker having a structure obtained by removing hydroxy groups from glycerin, diglycerine, triglycerin, tetraglycerin, pentaglycerin, hexaglycerin, heptaglycerin, pentaerythritol, dipentaerythritol, tetritol, pentitol, or hexitol.

6. The production method according to claim 1 or 2, wherein the solvent used in step (1a) or step (2b) is at least one selected from the group consisting of N,N-dimethylformamide, ethanol, ethyl acetate, chloroform, and toluene.

7. The production method according to claim 1 or 2, wherein the branched polyethylene glycol compound has a number average molecular weight of 4,000 to 80,000.

8. The production method according to claim 1 or 2, wherein the branched polyethylene glycol compound has a number average molecular weight of 5,000 to 80,000.

9. The production method according to claim 1 or 2, wherein the linear polyethylene glycol compound has a number average molecular weight of 1,500 to 90,000.

10. The production method according to claim 1 or 2, wherein the linear polyethylene glycol compound has a number average molecular weight of 2,000 to 90,000.
